# EUROPÄISCHE PATENTANMELDUNG

(11) **EP 1 424 494 A1**
(43) Veröffentlichungstag der Anmeldung: **02.06.2004**
(21) Anmeldenummer: 02026534.4
(22) Anmeldetag: 27.11.2002
(51) Int. Cl.: F02N 11/08, B60L 11/12

(54) **Hybridantriebssystem sowie Verfahren zur gemeinsamen Aufbringung von Antriebs-Drehmoment**

(71) Anmelder: Continental ISAD Electronic Systems GmbH & Co. oHG, 86898 Landsberg (DE)
(72) Erfinder: Malik, Manfred, 82377 Penzberg (DE)
(74) Vertreter: Lippich, Wolfgang, Dipl.-Phys, Dr.rer.nat.

(57) **Zusammenfassung**

Ein Hybridantriebssystem weist einen Verbrennungsmotor und eine elektrische Maschine auf. Diese sind mechanisch gekoppelt und bringen bei hoher Leistungsanforderung gemeinsam Antriebs-Drehmoment auf den Antrieb auf. Das Antriebssystem ist mit einem Kurzzeitspeicher und einem Langzeitspeicher ausgerüstet. Es ist so ausgebildet, daß der Langzeitspeicher und der Kurzzeitspeicher mit unterschiedlichen Ladespannungen geladen werden, wobei die Ladespannung des Langzeitspeichers niedriger als diejenige des Kurzzeitspeichers ist. Die beiden Speicher sind über ein elektrisches Ventil miteinander gekoppelt, derart, daß bei Speisung der elektrischen Maschine diese zunächst allein aus dem Kurzzeitspeicher gespeist wird, woraufhin dessen Spannung abnimmt und, wenn die Spannung des Kurzzeitspeichers die Spannung des Langzeitspeicherserreicht oder unterschreitet, das elektrische Ventil eine Parallelschaltung von Kurzzeitspeicher und Langzeitspeicher bewirkt.

## Beschreibung

Die Erfindung betrifft allgemein Hybridantriebe, und speziell ein Hybridantriebssystem, umfassend einen Verbrennungsmotor und eine elektrische Maschine, die mechanisch gekoppelt sind und bei hoher Leistungsanforderung gemeinsam Antriebs-Drehmoment auf den Antrieb aufbringen. Die Erfindung betrifft auch ein Verfahren zur gemeinsamen Aufbringung von Antriebs-Drehmoment.

Aus der Druckschrift EP 0 847 487 B1 ist ein Hybridantriebssystem mit einem Verbrennungsmotor und einer elektrischen Maschine bekannt. Diese sind mechanisch gekoppelt und bringen bei hoher Leistungsanforderung gemeinsam Antriebsdrehmoment auf den Antrieb auf. Anders ausgedrückt wirkt die elektrische Maschine als "Booster", um den Verbrennungsmotor z.B. bei Beschleunigungsvorgängen zu unterstützen. Die elektrische Maschine dient auch als Starter für den Verbrennungsmotor. Das Antriebssystem ist mit einem Kurzzeitspeicher und einem Langzeitspeicher ausgerüstet, welche mit unterschiedlichen Ladespannungen geladen werden. Und zwar ist die Ladespannung des Langzeitspeichers niedriger als diejenige des Kurzzeitspeichers. Die Speisung der elektrischen Maschine erfolgt aus dem Kurzzeitspeicher.

Aus der Druckschrift DE 197 09 298 A1 ist ein Hybridantriebssystem bekannt, bei dem ein Langzeitspeicher und ein Kurzzeitspeicher ebenfalls mit unterschiedlichen Ladespannungen geladen werden, wobei die Ladespannung des Langzeitspeichers niedriger als diejenige des Kurzzeitspeichers ist. Die beiden Speicher sind mit einem bidirektionalen Wandler gekoppelt, der bei Energieeinspeisung in den Langzeitspeicher als Abwärtswandler und bei Energieentnahme aus diesem als Aufwärtswandler wirkt. Beim Starten des Verbrennungsmotors erfolgt die Speisung der elektrischen Maschine nicht allein aus dem Kurzzeitspeicher; vielmehr wird simultan Energie aus beiden Speichern entnommen, wobei die aus dem Langzeitspeicher entnommene Energie durch den Hochsetzsteller auf das höhere Spannungsniveau des Kurzzeitspeichers hochgesetzt wird.

Aus der Druckschrift US 5,818,115 A ist eine Schaltungsanordnung für einen Starter eines Verbrennungsmotors bekannt, bei der ein Kondensator und eine Batterie über einen Schalter, z.B. in Form eines Thyristors, parallel geschaltet werden können. Normalerweise erfolgt das Starten bei geöffnetem Schalter allein aus dem Kondensator. Bei unzureichender Aufladung des Kondensator wird der Schalter aber offenbar vor dem Startvorgang geschlossen, so daß das Starten aus einer Parallelschaltung von Kondensator und Batterie erfolgt.

Aus der Druckschrift JP 2001123923 A ist eine weitere Schaltungsanordnung zur Speisung eines Starters bekannt, bei der eine Batterie und ein Kondensator bei der Lieferung des zum Starten benötigten Stroms zusammenwirken. Beide sind parallel geschaltet, werden also mit der gleichen Ladespannung aufgeladen, und geben beim Starten simultan ihre gespeicherte Energie ab. Zwischen die Batterie und den Kondensator ist eine Diode geschaltet, welche offenbar den Rückfluß von im Kondensator gespeicherter Energie in den Batteriekreis verhindern soll.

Aus dem Artikel von H. Michel et al.: "Groß..., Maxi..., UltraCap" der Zeitschrift 'Elektronik' vom 22.01.2002 ist eine Schaltungsanordnung bekannt, bei der eine Batterie und ein Kondensator in Form eines UltraCaps zum Starten eines Verbrennungsmotors parallel geschaltet werden.

Die Erfindung stellt demgegenüber ein Hybridantriebssystem bereit, welches einen Verbrennungsmotor und eine elektrische Maschine umfaßt, die mechanisch gekoppelt sind und bei hoher Leistungsanforderung gemeinsam Antriebsdrehmoment auf den Antrieb aufbringen. Das Antriebssystem ist mit einem Kurzzeitspeicher und einem Langzeitspeicher ausgerüstet. Der Langzeitspeicher und der Kurzzeitspeicher werden mit unterschiedlichen Ladespannungen geladen, und zwar ist die Ladespannung des Langzeitspeichers niedriger als diejenige des Kurzzeitspeichers. Der Kurzzeitspeicher und der Langzeitspeicher sind über ein elektrisches Ventil miteinander gekoppelt. Bei der Speisung der elektrischen Maschine wird diese zunächst allein aus dem Kurzzeitspeicher gespeist, woraufhin dessen Spannung abnimmt. Wenn die Spannung des Kurzzeitspeichers die Spannung des Langzeitspeichers erreicht oder unterschreitet, führt das elektrische Ventil eine Parallelschaltung von Kurzzeitspeicher und Langzeitspeicher.

Gemäß einem weiteren Aspekt ist die Erfindung auf ein Verfahren zur gemeinsamen Aufbringung von Antriebs-Drehmoment in einem Hybridantriebssystem mit einem Verbrennungsmotor und einer mechanisch mit diesem gekoppelten elektrischen Maschine gerichtet. Das Hybridantriebssystem ist mit einem Kurzzeitspeicher und einem Langzeitspeicher ausgerüstet. Diese werden vor der Energieentnahme mit unterschiedlichen Ladespannungen geladen, und zwar so, daß die Ladespannung des Langzeitspeichers kleiner als diejenige des Kurzzeitspeichers ist. Mit Hilfe einer Kopplung zwischen Kurzzeitspeicher und Langzeitspeicher durch ein elektrisches Ventil erfolgt die Speisung der elektrischen Maschine zunächst allein aus dem Kurzzeitspeicher, woraufhin dessen Spannung abnimmt. Wenn die Spannung des Kurzzeitspeichers die Spannung des Langzeitspeichers erreicht oder unterschreitet, wird mit dem elektrischen Ventil eine Parallelschaltung von Kurzzeitspeicher und Langzeitspeicher bewirkt.

Die Erfindung wird nun anhand von bevorzugten beispielhaften Ausführungsformen und der angefügten beispielhaften Zeichnung näher erläutert. In der schematischen Zeichnung zeigen:
- Fig. 1: ein sog. Ragone-Diagramm für verschiedene Energiespeicher;
- Fig. 2: ein Prinzipschaltbild eines Energiespeicherteils;
- Fig. 3: ein Schaltbild ähnlich Fig. 2, bei dem die Ausführung eines Abwärtswandlers dargestellt ist;
- Fig. 4: ein Prinzipschaltbild eines Abwärtswandlers und die sich bei der Abwärtswandlung ergebenden Spannungen und Ströme;
- Fig. 5: ein weiteres Ausführungsbeispiel eines Energiespeicherteils zusammen mit einer Schaltung zur Speisung einer elektrischen Maschine eines Hybridantriebssystems;
- Fig. 6: eine Ausführungsform ähnlich Fig. 5, bei der ein elektrisches Ventil aktiv von einem Energiemanagement-Steuergerät gesteuert wird;
- Fig. 7: eine schematische Darstellung eines Hybridantriebssystems;
- Fig. 8: ein Diagramm der zeitlichen Verläufe von Kurzzeit- und Langzeitspeicher für geringe Energieentnahme; und
- Fig. 9: ein Diagramm ähnlich Fig. 8, jedoch für eine größere Energieentnahme.

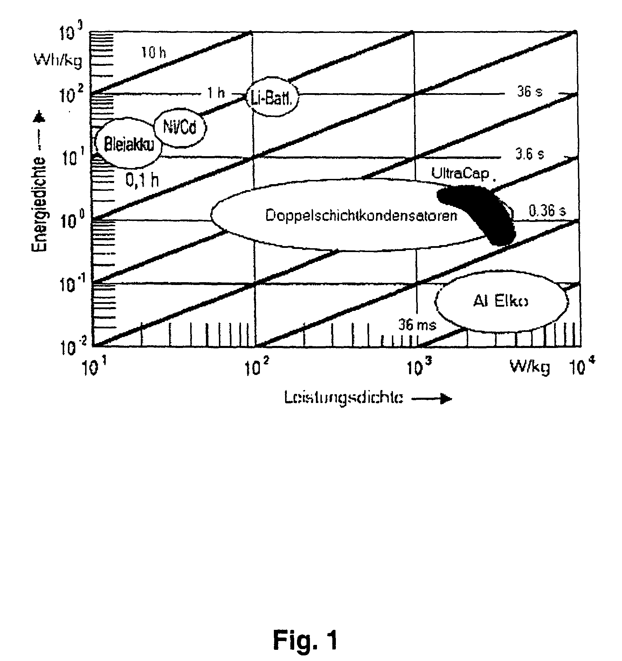

Fig. 1 zeigt ein sog. Ragone-Diagramm (Energiedichte als Funktion der Leistungsdichte) für verschiedene Energiespeicher. Anhand dieses Diagramms werden die "Kurzzeitspeicher" und "Langzeitspeicher" der bevorzugten Ausführungsformen näher erläutert. Die im Ragone-Diagramm diagonal verlaufenden Linien sind Isochronen, d.h. Linien gleicher Entnahmezeit (mit Entnahmezeit ist diejenige Minimalzeit gemeint, innerhalb derer einem Energiespeicher z.B. 97 % von dessen Nominalspeicherenergie entnommen werden kann). Unter Kurzzeitspeicher wird im Rahmen der bevorzugten Ausführungsformen jeder Speicher für elektrische Energie verstanden, bei dem die Entnahmezeit unter 6 min liegt, vorzugsweise unter 60 sec und besonders vorzugsweise unter 10 sec. Demgegenüber wird als Langzeitspeicher im Sinne der bevorzugten Ausführungsformen jeder elektrische Energiespeicher verstanden, bei dem die Entnahmezeit über 6 min beträgt, vorzugsweise über 15 min und besonders vorzugsweise über 30 min.

Als Beispiele für Kurzzeitspeicher im Sinne der bevorzugten Ausführungsbeispiele zeigt das Ragone-Diagramm gemäß Fig. 1 Doppelschicht-Kondensatoren, von denen sog. "UltraCaps" besonders bevorzugt sind. Diese weisen ein speziell präpariertes Kohlenstofftuch auf, das mit einem hochleitfähigen organischen Elektrolyten getränkt ist. Solche UltraCaps sind beispielsweise von Siemens Matsushita Components bzw. EPCOS erhältlich. Neben Kondensatoren können sich als Kurzzeitspeicher aber auch chemische Energiespeicher für hohe Leistungsentnahmen eignen, beispielsweise sog. alkalische Sekundärsysteme, alkalische Nickel/Cadmium-Systeme oder Nickel/Eisen-Systeme, die z.B. Sinter-Elektroden oder Faserstruktur-Elektroden enthalten können. Bevorzugte Beispiele für Langzeitspeicher sind gemäß Fig. 1 elektrochemische Batterien, wie die Lithium-Batterie (d.h. aus Lithium-Ionen-Zellen aufgebaute Systeme), die Nickel/Cadmium-Batterie oder der Bleiakkumulator. Außerdem können als Langzeitspeicher auch Brennstoffzellen Verwendung finden. Bei den bevorzugten Ausführungsformen werden als Kurzzeitspeicher UltraCaps und als Langzeitspeicher Lithium-Ionen-Batterien mit spiralförmigen Zellen verwendet.

Das Ragone-Diagramm gemäß Fig. 1 zeigt, daß Doppelschicht-Kondensatoren in geeigneter Weise die Lücke zwischen dem herkömmlichen Bleiakkumulator und herkömmlichen Aluminium-Elektrolytkondensatoren schließen. Anders als bei den genannten Elektrolytkondensatoren, welche die Polarisation eines Dielektrikums zur Energiespeicherung nutzen, besteht der Speichermechanismus bei Doppelschicht-Kondensatoren in einer Ladungsverschiebung an der Grenzfläche zwischen Elektrode und Elektrolyt. Durch den Einsatz von Aktivkohle-Vliesen bei UltraCaps kann dabei die zur Verfügung stehende Kondensatorfläche extrem vergrößert werden, so daß Energiedichten im Bereich von 20 Wh/kg erreicht werden können. Bei UltraCaps liegen die typischen Entnahmezeiten zwischen 0,1 sec bis 20 sec. Abhängig von der jeweiligen Elektrodenstruktur vergehen allerdings tatsächlich mehrere Stunden, bis die gesamte Restladung abgeflossen ist, aus welchem Grund die Entnahmezeit - wie bereits oben ausgeführt - nicht auf die gesamte Nominalspeicherenergie, sondern nur auf einem Anteil, wie beispielsweise 97 % bezogen wird.

Der maximale Lade-/Entladestrom wird lediglich durch den Innenwiderstand bestimmt, so daß unbeabsichtigte Kurzschlüsse den UltraCap nicht zerstören. Der Ladezustand ist dabei ausschließlich eine Funktion der Spannung, ist aber nicht wie bei elektrochemischen Batterien abhängig von verschiedenen dynamischen, chemischen und physikalischen Faktoren. Die Temperatur hat nahezu keinen Einfluß auf die Kapazität eines UltraCaps. Vorteilhaft ist insbesondere, daß einige hunderttausend Ladungszyklen bei einer Brauchbarkeitsdauer im Bereich von bis zu 100.000 h erreicht werden können. Weitere Einzelheiten zu UltraCaps sind z.B. aus dem eingangs genannten Artikel von Michel bekannt.

Bei einem elektrochemischen Langzeitspeicher werden im allgemeinen zwischen Anode und Kathode in einem Elektrolyt Ionen transportiert, die an der Anode bzw. Kathode elektrochemisch reagieren, wodurch ein entsprechender Lade- bzw. Entladestrom zwischen Anode und Kathode bei der Zellenspannung fließt. Beispielsweise bei einer Lithiumbatterie werden in Elektrolyt Li⁺-Ionen transportiert, wobei die Anode aus Kohlenstoff und die Kathode aus einem Lithium-Übergangsmetalloxid aufgebaut sind. Zur Oberflächenvergrößerung sind Kathode und Anode vorteilhaft spiralförmig aufgewickelt. Derartige Lithium-Ionen-Zellen werden beispielsweise von der Firma AGM vertrieben. Grundsätzlich ist es bei derartigen Langzeitspeichern zur Verlängerung der Lebensdauer günstig, die Batterie während des Betriebes möglichst auf einem hohen Ladungszustand (oder SoC-Niveau (SoC=State of charge)) zu halten.

Im Stand der Technik werden für die Boost-Funktion von Hybridfahrzeugen entweder Batterien oder Kondensatoren verwendet, zum Starten von Verbrennungsmotoren auch Parallelschaltungen von Kondensatoren und Batterien. Die Verwendung nur von einer Batterie erfordert eine Überdimensionierung der Batterie; zudem führen die häufigen tiefen Entladungen zu einer kurzen Batterielebensdauer. Bei den genannten Kondensator-Batterie-Kombinationen sind lange Entladephasen energetisch nicht optimal darstellbar. Zudem ist die Nutzung des Kondensatorspeichers meist nicht optimal, d.h. das Speichersystem ist relativ aufwendig.

Bei den bevorzugten Ausführungsformen werden in vorteilhafter neuartiger Weise die Vorzüge eines Kurzzeitspeichers mit denen eines Langzeitspeichers verbunden. Der Langzeitspeicher ist bei den bevorzugten Ausführungsformen an kurzzeitigen bis mittellangen Energiedurchsätzen nicht beteiligt. Hierdurch wird die Lebensdauer des Langzeitspeichers vergrößert. Der größte Teil des Energiedurchsatzes geht über den Kurzzeitspeicher. Dies wird erreicht durch die unterschiedliche Spannungswahl der beiden Speicher und deren Trennung mit Hilfe des elektrischen Ventils. Insgesamt erlaubt diese Energiespeicher-Kombination einerseits hohe bidirektionale Pulsleistung im Kurzzeitbereich und andererseits hohe Dauerentladung im Minutenbereich bei relativ geringem baulichen Aufwand und relativ hoher Lebensdauer des Langzeitspeichers.

Bei den bevorzugten Ausführungsformen wirken also zwei technische Aspekte zusammen: Einerseits die Ladung der beiden Speicher, und zwar so, daß die Ladespannung des Kurzzeitspeichers über derjenigen des Langzeitspeichers liegt; und andererseits die Entladung der beiden Speicher, nämlich daß die Entladung zunächst allein aus dem Kurzzeitspeicher erfolgt, woraufhin dessen Spannung abnimmt, und, wenn die Spannung des Kurzzeitspeichers die Spannung des Langzeitspeichers erreicht oder unterschreitet, das elektrische Ventil eine Parallelschaltung beider Speicher bewirkt.

Bei einigen der bevorzugten Ausführungsformen fällt im elektrischen Ventil im Durchlaßbetrieb eine Spannung ab (die Durchlaßspannung), welche in das Zusammenspiel der Spannungen von Kurzzeit- und Langzeitspeicher einzubeziehen ist. Bei diesen Ausführungsformen wird die Parallelschaltung zwischen den beiden Speichern durch das elektrische Ventil erst dann herbeigeführt, wenn die Spannung des Kurzzeitspeichers die Summe aus der Spannung des Langzeitspeichers und der Durchlaßspannung erreicht oder unterschreitet.

Bei einigen der bevorzugten Ausführungsformen ist das elektrische Ventil eine (Leistungs-)Diode, z.B. eine Schottky-Diode. Bei anderen der bevorzugten Ausführungsformen ist das elektrische Ventil ein von einer Steuerung gesteuerter elektrischer Schalter. Die Steuerung kann beispielsweise mit einem Spannungssensor ausgerüstet sein, welcher die Spannungsdifferenz zwischen Kurz- und Langzeitspeicher mißt und, solange diese Differenz positiv ist, das elektrische Ventil öffnet und, wenn diese Differenz Null oder negativ wird, das elektrische Ventil öffnet.

Wie bereits oben ausgeführt wurde, ist bei einigen der bevorzugten Ausführungsformen der Kurzzeitspeicher ein Kondensatorspeicher, und der Langzeitspeicher ein elektrochemischer Speicher. Obwohl die Möglichkeit, daß es sich hierbei um einen einzelnen Kondensator und/oder eine einzige elektrochemische Zelle handelt, mit eingeschlossen ist, sind diese Speicher vorzugsweise aus Parallel- und/oder Serienschaltungen mehrerer Kondensatoren bzw. elektrochemischen Zellen aufgebaut.

Um den Langzeitspeicher nur bei relativ lang dauernden Energiedurchsätzen heranzuziehen, ist bei den bevorzugten Ausführungsformen die Ladespannung des Langzeitspeichers deutlich niedriger als diejenige des Kurzzeitspeichers. So beträgt sie bei einigen der bevorzugten Ausführungsformen höchstens 66% der Ladespannung des Kurzzeitspeichers, bei anderen bevorzugten Ausführungsformen sogar nur 50% .

Die Ladung des Langzeitspeichers mit einer niedrigeren Ladespannung als diejenige des Kurzzeitspeichers kann schaltungsmäßig auf unterschiedliche Weisen realisiert sein. Bei einigen der bevorzugten Ausführungsformen ist hierfür zwischen Kurzzeitspeicher und Langzeitspeicher ein Abwärts-Wandler geschaltet, der die niedrigere Ladespannung des Langzeitspeichers aus dem höheren Spannungsniveau desjenigen Schaltungsteils, in dem der Kurzzeitspeicher liegt, erzeugt. Der Abwärts-Wandler kann relativ zu dem elektrischen Ventil für kleine Leistungen ausgelegt sein (z.B. für weniger als 20% der Maximalleistung des elektrischen Ventils), da für das Rückladen des Langzeitspeicher i.a. genug Zeit zur Verfügung steht und überdies bei vielen elektrochemischen Speichern die maximale Ladeleistung geringer als die maximale Entladeleistung ist. Fakultativ ist neben diesem Abwärts-Wandler außerdem ein in der entgegengesetzten Richtung wirkender Aufwärts-Wandler vorgesehen. Letzteres ermöglicht in Fällen, in denen der Kurzzeitspeicher bei stehendem Verbrennungsmotor entladen ist, dessen Aufladung aus dem Langzeitspeicher und schafft z.B. eine Notstartfähigkeit bei solchen Ausführungsformen, bei denen die zum Starten des Verbrennungsmotors dienende Energie aus dem Kurzzeitspeicher entnommen wird.

Bei anderen der bevorzugten Ausführungsformen erfolgt die Aufladung des Langzeitspeichers mit niedrigerer Ladespannung als derjeniger des Kurzzeitspeichers aus einem anderen Bordnetzteil, also ohne den oben genannten Abwärts-Wandler. Je nachdem, ob dieser andere Bordnetzteil spannungsmäßig über oder unter dem Langzeitspeicher liegt, dient dann ein Abwärts-Wandler oder ein Aufwärts-Wandler für die Erzeugung der gegenüber dem Kurzzeitspeicher niedrigeren Ladespannung des Langzeitspeichers. Eine Kopplung mit dem Kurzzeitspeicher ist bei diesen Ausführungsformen nur indirekt dadurch gegeben, daß auch der Kurzzeitspeicher mit dem anderen Bordnetzteil über einen geeigneten Abwärts- oder Aufwärts-Wandler gekoppelt ist.

Bei einigen der bevorzugten Ausführungsformen ist die elektrische Maschine eine Drehfeldmaschine, welche durch einen Gleichspannungszwischenkreis-Wechselrichter angesteuert wird. Bei diesen Ausführungsformen ist der Kurzzeitspeicher in den Zwischenkreis des Wechselrichters geschaltet. Aus dem Kurzzeitspeicher entnommene Energie fließt somit direkt in den Wechselrichter, steht also der elektrischen Maschine auf möglichst direkte Weise (unter Zwischenschaltung des Wechselrichters) zur Verfügung.

Bei einigen der bevorzugten Ausführungsformen ist neben dem Kurzzeitspeicher und dem Langzeitspeicher ein weiterer Langzeitspeicher vorgesehen, der als "Bordnetz-Langzeitspeicher" bezeichnet wird. Bei diesen handelt es sich beispielsweise um einen herkömmlichen Blei-Schwefelsäure-Akkumulator. Bei den bevorzugten Ausführungsformen ist somit der Langzeitspeicher nicht etwa mit der herkömmlichen Bordnetzbatterie identisch, sondern ist ein zusätzlicher Langzeitspeicher, der allein der Stützung des Kurzzeitspeichers, insbesondere bei zeitlich langdauernder Drehmomentunterstützung durch die elektrische Maschine und ggf. beim Starten des Verbrennungsmotors dient. Bei den bevorzugten Ausführungsformen handelt es sich also um ein Drei-Speicher-System, wobei die drei Speicher auf unterschiedlichen Spannungsniveaus liegen können. Beispielsweise liegt der Kurzzeitspeicher auf einem variablen Zwischenkreis-Spannungsniveau zwischen 21 und 48 Volt, der Langzeitspeicher auf 24 Volt und der Bordnetz-Langzeitspeicher auf 12 Volt. Bei einigen dieser Ausführungsformen mit Zwischenkreis-Wechselrichter ist der Bordnetz-Langzeitspeicher über einen Abwärts-Wandler mit dem Zwischenkreis verbunden.

Bei einigen der bevorzugten Ausführungsformen sitzt die elektrische Maschine auf der Kurbelwelle des Verbrennungsmotors und ist permanent mit ihr gekoppelt. Bei manchen Ausführungsformen ist zwischen der Kurbelwelle und dem Läufer der elektrischen Maschine ein Über- oder Untersetzungsgetriebe geschaltet (z.B. in Form eines Planetengetriebes). Bei den besonders bevorzugten Ausführungsformen ist der Läufer der elektrischen Maschine jedoch drehfest mit der Kurbelwelle gekoppelt, d.h. er dreht permanent mit der gleichen Drehzahl wie der Verbrennungsmotor.

Bei einigen der bevorzugten Ausführungsformen hat die elektrische Maschine neben der Boostfunktion die Funktion eines Direktstarters des Verbrennungsmotors, d.h. sie kann den Verbrennungsmotor aus dem Stand, mit gleicher Drehzahl wie dieser drehend, starten. Außerdem dient die elektrische Maschine bei einigen der bevorzugten Ausführungsformen als Generator zur Aufladung des Kurzzeit- und Langzeitspeichers sowie ggf. eines Bordnetz-Langzeitspeichers und zur Speisung von Verbrauchern. Bei einer Synchronmaschine ist im Generatorbetrieb keine Erregung erforderlich, hier braucht der Wechselrichter nur gleichrichtend zu wirken. Bei einer Asynchronmaschine erzeugt der Wechselrichter auch im Generatorbetrieb Phasen-Wechselströme, die jedoch im Unterschied zum Motorbetrieb der Drehung des Läufers nacheilen (sog. negativer Schlupf), so daß die elektrische Maschine generatorisch bremsend arbeitet. Auf der Kurbelwelle sitzende elektrische Maschinen mit Starterund Generatorfunktion werden auch als "Kurbelwellen-Starter-Generatoren" bezeichnet.

Bei einigen der bevorzugten Ausführungsformen ist das so ausgebildet ist, daß die elektrische Maschine außerdem bei Fahrzeugbremsung als Rekuperationsbremse arbeiten kann. Hierbei wird die bei einer Rekuperationsbremsung im Generatorbetrieb gewonnene elektrische Energie wenigstens teilweise im Kurzzeitspeicher gespeichert, wobei wegen dessen Kurzzeitcharakteristik relativ hohe Bremsleistungen erzielbar sind. Sie kann dort verbleiben und bei späteren Boost-Vorgängen wiederverwendet werden, oder kann nach der Rekuperationsbremsung zum (relativ langsamen) Nachladen des Langzeitspeichers und/oder des ggf. vorhandenen Bordnetz-Langzeitspeichers dienen.

Die obigen und folgenden Ausführungen zu Ausführungsformen des Hybridantriebssystems treffen in gleicher Weise zu den bevorzugten Ausführungsformen des Verfahrens zur gemeinsamen Aufbringung von Antriebs-Drehmoment zu, so daß deren Diskussion im Verfahrenskontext zwecks Vermeidung von Wiederholungen hier unterbleiben kann.

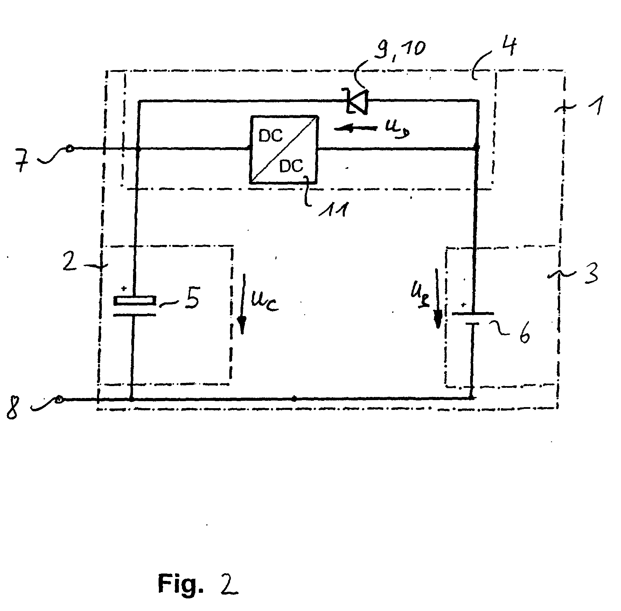

Nun zurückkehrend zu den Figuren, zeigt Fig. 2 ein Prinzipschaltbild des Energiespeicherteils 1 einer bevorzugten Ausführungsform des Hybridantriebssystems. Er umfaßt einen Kurzzeitspeicher 2 und einen Langzeitspeicher 3, die über ein Kopplungselement 4 miteinander verbunden sind. Der Kurzzeitspeicher 2 wird bei einigen bevorzugten Ausführungsformen durch einen oder mehrere UltraCaps 5 gebildet. Der Langzeitspeicher 3 ist bei einigen der bevorzugten Ausführungsformen eine Batterie 6 mit mehreren Lithium-Ionen-Zellen. Der Langzeitspeicher 3 ist mit seinem positiven Pol über das Kopplungselement 4 mit dem positiven Pol des Kurzzeitspeichers 2 verbunden. Der Energiespeicherteil 1 weist Außenklemmen 7 und 8, über die dem Energiespeicherteil 1 beim Laden Energie zugeführt und beim Entladen Energie abgeführt wird. Die Außenklemme 7 ist mit dem positiven Pol der Kurzzeitspeichers 2 verbunden, und die Außenklemme 8 ist mit dem negativen Pol der Speicher 2, 3 verbunden. Das Kopplungselement 4 wird durch eine Parallelschaltung eines elektrischen Ventils 9, z.B. einer Diode 10, und eines Abwärts-Spannungswandlers 11 gebildet. Das Durchgangs- bzw. Sperrverhalten der Diode 10 hängt von der an der Diode anliegenden Diodenspannung U_{D} ab. Diese ist die Differenz zwischen der Spannung U_{B} der Batterie 6 und der Spannung U_{C} am UltraCap 5. Für das Schaltverhalten der Diode 10 kann näherungsweise angenommen werden, daß sie durchschaltet, wenn die Diodenspannung U_{D} größer als die Durchlaßspannung U_{DL} der Diode 10 ist, und im anderen Fall sperrt.

Beim Laden des Energiespeicherteils 1 ist U_{C} immer größer als U_{B}, so daß die Diode 10 sperrt, also in dem Kopplungselement 4 nur der Abwärts-Wandler 11 wirkt.

Beim Entladen des Energiespeicherteils 1 ist hingegen eine Fallunterscheidung hinsichtlich der Spannungsdifferenz von U_{C} und U_{B} zu treffen. Solange die Sperrbedingung U_{C} > U_{B}-U_{DL} gilt, sperrt die Diode 10, so daß eine Entladung des Energiespeicherteils 1 über die Außenklemmen 7, 8 nur aus dem UltraCap 5 erfolgt. Im Laufe dieser Entladung sinkt dessen Spannung U_{C} ab, bis die oben genannte Sperrbedingung nicht mehr erfüllt ist, woraufhin die Diode 10 durchläßt, so daß der UltraCap 5 und die Batterie 6 über die Diode 10 parallel geschaltet sind. Beim Entladen ist der Abwärts-Wandler 11 deaktiviert, so daß bei gesperrter Diode 10 die gesamte Leistung des UltraCaps 6 an den Außenklemmen 7, 8 zur Verfügung steht. Sobald die Diode 10 auf Durchlaß schaltet, wird der Abwärtswandler 11 von dieser überbrückt.

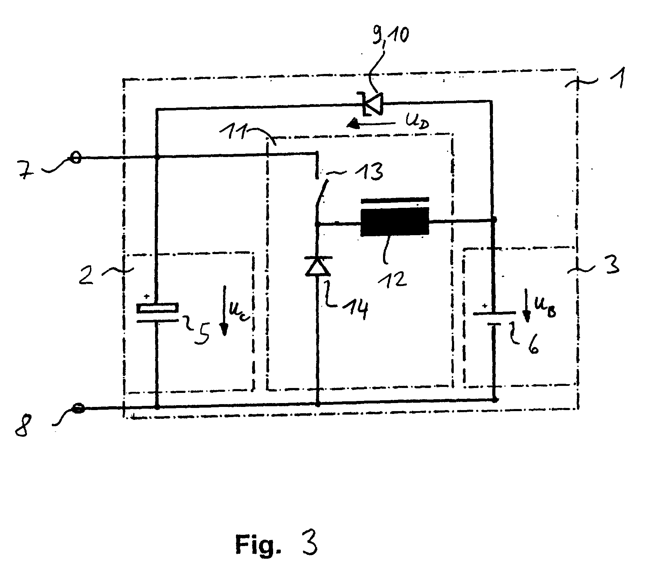

Fig. 3 zeigt eine Schaltung entsprechend Fig. 2, bei welcher ein Ausführungsbeispiel für die Ausführung des Abwärtswandlers 11 dargestellt ist. Dieser ist aus einer Speicherdrossel 12, einem Leistungsschalter 13 und einer Diode 14 - die im folgenden auch als "Abwärtswandlerschalter" bzw. "Abwärtswandlerdiode" bezeichnet werden - aufgebaut. Der Leistungsschalter 13 und die Abwärtswandlerdiode 14 liegenden in Reihenschaltung zwischen dem spannungshöheren Eingang des Spannungswandlers 11 mit der negativen Außenklemme 8. Die Speicherdrossel 12 liegt zwischen einem Punkt zwischen Leistungsschalter 13 und Abwärtswandlerdiode 14 und dem positiven Pol der Batterie 6.

Zunächst wird der Ladevorgang des Energiespeicherteils gemäß Fig. 3 beschrieben. Das elektrische Ventil 9 ist dabei in sperrendem Zustand, hat also keine Funktion während des Ladevorgangs. Beim Aufladen wird zunächst der UltraCap 5 direkt von der an den Außenklemmen 7, 8 anliegenden Spannung U_{C} (z.B. 48V) aufgeladen. Der Abwärtswandler 11 setzt diese Spannung auf die niedrigere Ladespannung U_{B} (z.B. 48V) der Batterie 6. Das Ausmaß der Spannungsherabsetzung ergibt sich aus dem Tastverhältnis des Leistungsschalters 13. Wegen des Innenwiderstands der Batterie 6 zeigt sie nach Aufladung eine etwas geringere Klemmenspannung als die Ladespannung, z.B. 24V bei 28V Ladespannung.

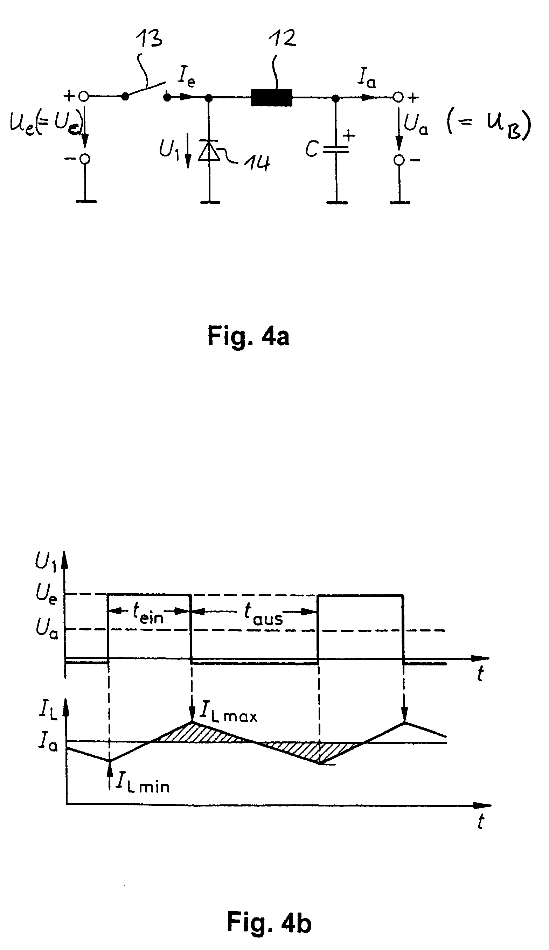

Zur Erläuterung der Wirkungsweise des Abwärtswandlers 11 gemäß Fig. 3 zeigt Fig. 4a ein Prinzipschaltbild und Fig. 4b die sich ergebenden Spannungen und Ströme. Solange der Schalter 13 geschlossen ist, liegt an der Abwärtswandlerdiode 14 die Eingangsspannung Uₑ an, so daß diese sperrt. Durch die Speicherdrossel 12 fließt ein Strom, dessen Größe - begrenzt durch die Drosselwirkung - langsam zunimmt. Wenn der Schalter 13 öffnet, behält der Strom durch die Speicherdrossel 12 seine Richtung bei, wobei die Abwärtswandlerdiode 14 leitend wird. Der Stromfluß nimmt in dieser Phase langsam ab. Die Kapazität der Batterie 6 übernimmt dabei die Funktion des in Fig. 4a dargestellten Glättungskondensators C. Die durch diesen gemittelte Ausgangsspannung U_{DL} ergibt sich somit aus dem Tastverhältnis des Schalters 13 wie folgt: Uₐ = tₑᵢₙ/(tₑᵢₙ + tₐᵤₛ) x Uₑ

Bei den in Fig. 4b gezeigten Beispiel ist das Tastverhältnis so groß, daß der Strom nicht auf Null absinkt. Bei kleineren Tastverhältnissen sinkt der Drosselstrom während der Sperrphase des Schalters 13 ab, so daß die Abwärtswandlerdiode 14 sperrt und die Spannung an der Drossel Null wird.

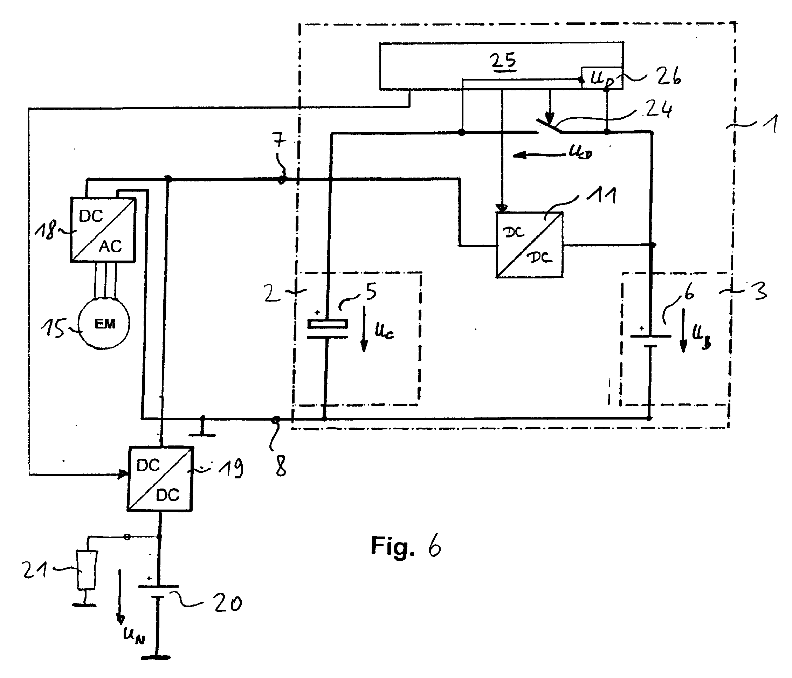

Bei anderen bevorzugten Ausführungsformen funktioniert der Abwärtswandler mittels sog. Schwall-Ladung. Hierzu ist er als Schalter zwischen UltraCap 5 und Batterie 6 ausgebildet, der zum Zweck der Rückladung der Batterie 6 so lange geschlossen wird, bis an der Batterie die maximale Batteriespannung erreicht wird (eine Steuereinrichtung für den genannten Schalter erhält hierzu Meßwerte der Batteriespannung). Hierdurch gelangt ein Ladungsschwall vom UltraCap 5 in die Batterie 6. Falls nötig, wird dieser Vorgang zur Rückladung der Batterie 6 mehrmals wiederholt. Besonders vorteilhaft ist ein solcher Schwall-Abwärtswandler bei der unten näher erläuterten Ausführungsform gemäß Fig. 6, bei der das elektrische Ventil 9 durch einen gesteuerten elektrischen Schalter 24 gebildet wird. Dieser (bidirektionale) Schalter 24 kann bei geeigneter Ansteuerung im oben erläuterten Sinn auch als Schalter des Schwall-Abwärtswandlers fungieren. Bei solchen Ausführungsformen entfällt also in Fig. 6 das mit "11" bezeichnete, gesonderte Symbol für den Abwärtswandler 11, da dessen Funktion von dem Schalter 24 zusammen mit dem Steuergerät 25 übernommen wird.

Nun zurückkommend auf Fig. 3 ist, wenn keine Aufladung der Batterie 6 erfolgen soll, der Abwärtswandler 11 inaktiv, und zwar dadurch, daß der Leistungsschalter 13 permanent geöffnet bleibt. Dies gilt insbesondere bei dem im folgenden beschriebenen Entladevorgang des Energiespeicherteils 1.

Beim Entladevorgang ist zunächst die Sperrbedingung U_{C} > U_{B} - U_{DL} erfüllt, so daß die Diode 10 sperrt. Die Entladung des Energiespeicherteils 1 erfolgt in diesem Zustand alleine aus dem UltraCap 5. Im Verlauf des Entladevorgangs sinkt die Spannung U_{C} des UltraCaps 5 ab. Falls dieses Absinken so weit geht, daß die obige Sperrbedingung nicht mehr gilt, oder - anders ausgedrückt - U_{C} ≤ U_{B} - U_{DL} gibt, so schaltet die Diode 10 durch, so daß (unter Vernachlässigung des geringfügigen Durchlaßwiderstandes der Diode 10) eine Parallelschaltung von UltraCap 5 und Batterie 6 vorliegt. Da die Spannungskennlinie der Batterie 6 im Vergleich zu der des UltraCaps 5 im wesentlichen konstant ist, liefert nun die Batterie 6 den größten Teil der an den Außenklemmen 7, 8 abgegebenen Energie.

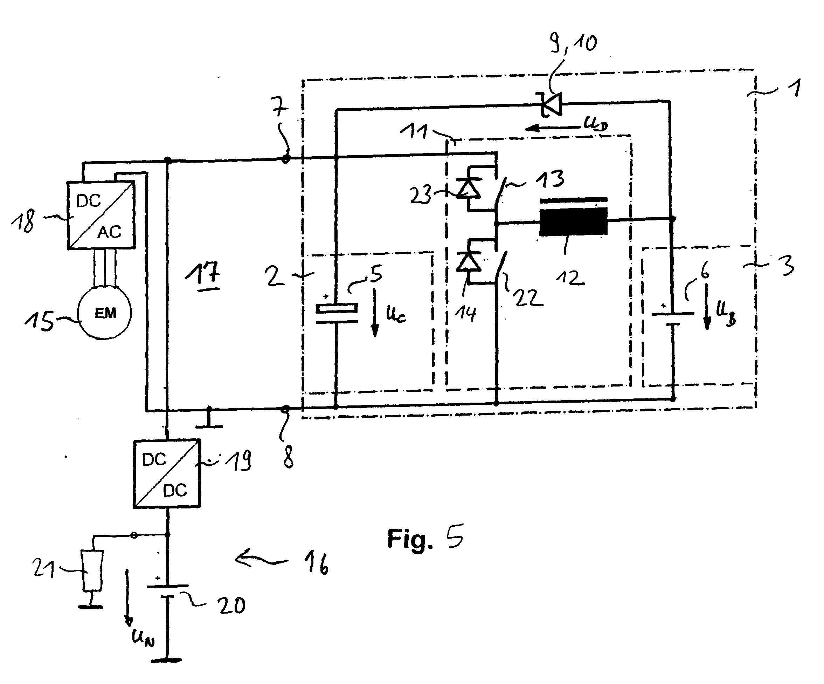

Fig. 5 zeigt ein weiteres Ausführungsbeispiel des Energiespeicherteils 1, nun zusammen mit einer Schaltung zur Speisung einer elektrischen Maschine 15 eines Hybridantriebssystems sowie eines Bordnetzes 16 für ein mit diesem Antriebssystem ausgerüstetes Fahrzeug. Und zwar sind die Außenklemmen 7, 8 mit einem Gleichspannungs-Zwischenkreis 17 eines Wechselrichters 18 verbunden. Dieser erzeugt z.B. mit Hilfe von sinusbewerteter Pulsweitenmodulation aus der Gleichspannung des Zwischenkreises 17 Drei-Phasen-Wechselspannungen zur Speisung der elektrischen Maschine 15, hier einer Asynchron-Drehstrommaschine. Die Drei-Phasen-Wechselspannungen können - innerhalb gewisser Grenzen - mit beliebiger Frequenz, Phase und Amplitude erzeugt werden, so daß die elektrische Maschine 15 drehzahl- und drehmomentvariabel sowohl motorisch als auch generatorisch betrieben werden kann.

Außerdem ist mit dem Zwischenkreis 17 das Bordnetz 16 über einen Bordnetzwandler 19 verbunden. Dieser setzt die höhere Zwischenkreisspannung (die z.B. variabel im Bereich von 21 bis 48 Volt liegt) auf das niedrigere Spannungsniveau (Bordnetzspannung U_{N}) des Bordnetzes 16 (das z.B. auf 14 Volt liegt) herab. Bei einigen bevorzugten Ausführungsformen ist der Bordnetzwandler 19 ein bidirektionaler Wandler, der außerdem Energiefluß aus dem Bordnetz 16 in den Zwischenkreis 17 erlaubt und dabei die niedrigere Bordnetzspannung in die höhere Zwischenkreisspannung heraufsetzt. Im Bordnetz 16 ist eine Bordnetzbatterie 20, z.B. eine herkömmliche Blei-Schwefelsäure-Batterie angeordnet. Das Bordnetz 16 dient im wesentlichen der Speisung elektrischer Verbraucher 21 im Fahrzeug. Die Bordnetzbatterie 20 hat eine Notlauffunktion, indem sie beispielsweise bei Ausfall des Bordnetzwandlers 19 den Weiterbetrieb von Verbrauchern 21, wie beispielsweise der Fahrzeugbeleuchtung erlaubt. Bei Ausführungsformen, bei denen der Bordnetzwandler 19 auch als Aufwärts-Wandler in den Zwischenkreis 17 ausgebildet ist, kann ferner aus der Bordnetzbatterie 20 Energie in den Zwischenkreis 17 gespeist werden, z.B. zum Aufladen des Kurzzeitspeichers 2.

Bei dem Ausführungsbeispiel gemäß Fig. 5 ist außerdem das Kopplungselement 4 zusätzlich als Aufwärts-Wandler ausgebildet. Hierzu ist es erweitert worden, um eine Aufwärtswandlerschalter 22, welcher der Abwärtswandlerdiode 14 parallel geschaltet ist, sowie um eine Aufwärtswandlerdiode 23, welche dem Abwärtswandlerschalter 13 parallel geschaltet ist. Die Aufwärtswandlerfunktion des Kopplungselements 4 wird dadurch erzielt, daß der Aufwärtswandlerschalter 22 getaktet wird, während der Abwärtswandlerschalter 13 geöffnet bleibt. In Analogie zu der Beschreibung der Abwärtswandlung gemäß Fig. 4 ergibt sich dann die Spannung U_{C} am UltraCap 5 in Abhängigkeit von der Spannung U_{B} an der Batterie 6 als U_{C} = (tₑᵢₙ + tₐᵤₛ)/tₐᵤₛ X U_{B}

Fig. 6 zeigt eine weitere bevorzugte Ausführungsform, bei der das elektrische Ventil 9 durch einen Leistungsschalter 24 gebildet wird, der aktiv von einem Energiemanagement-Steuergerät 25 gesteuert wird. Das Steuergerät 25 ist mit einem Sensor 26 ausgerüstet, der die Spannungsdifferenz zwischen der UltraCap-Spannung U_{C} und der Batteriespannung U_{B} detektiert. Solange diese Spannungsdifferenz positiv ist, hält das Steuergerät 25 den Leistungsschalter 24 geöffnet. Sobald sie jedoch Null oder negativ wird, steuert es den Leistungsschalter 24 in den geschlossenen Zustand und stellt damit eine Parallelschaltung von UltraCap 5 und Batterie 6 her. Gemäß Fig. 6 steuert das Energiemanagement-Steuergerät 25 auch den Abwärts- und Aufwärtsspannungswandler 11 (der gemäß Fig. 5 ausgebildet ist) sowie den Bordnetzwandler 19. Es sei angemerkt, daß ein entsprechendes Energiemanagement-Steuergerät auch bei der Ausführungsform gemäß Fig. 5 für die Steuerung der Wandler 11 und 19 vorgesehen ist - anders als bei Fig. 6 braucht dort aber das Steuergerät nicht für die aktive spannungsdifferenz-abhängige Parallelschaltung von Kurzzeitspeicher 2 und Langzeitspeicher 3 zu sorgen, da dort für das elektrische Ventil 9 ein durch die Spannungsdifferenz selbst-gesteuertes Ventil, nämlich die Diode 10 verwendet wird.

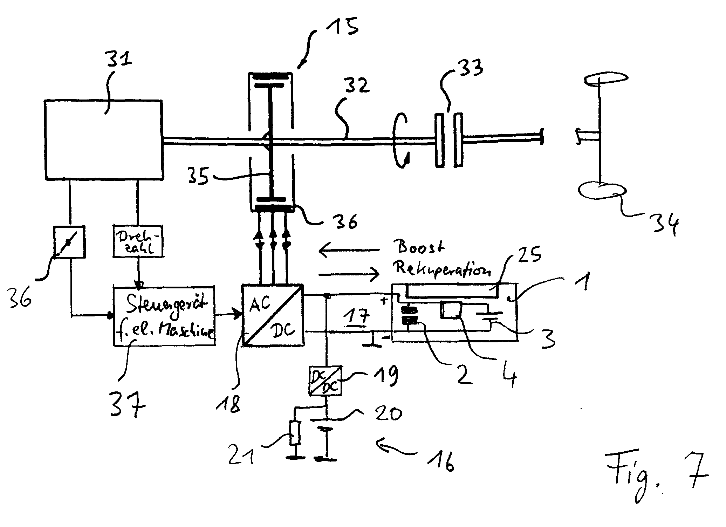

Fig. 7 veranschaulicht schematisch ein Hybridantriebssystem, das mit einer Schaltungsanordnung gemäß Fig. 5 oder 6 ausgerüstet ist. Und zwar weist das Antriebssystem einen Verbrennungsmotor 31 auf, der Drehmoment über eine Antriebswelle 32 (z.B. die Kurbelwelle), eine Kupplung 33 und weitere (nicht gezeigte) Teile eines Antriebsstrangs (zu denen z.B. ein Gangwechselgetriebe gehören kann) auf Antriebsräder 34 des mit dem Antriebssystem ausgerüsteten Fahrzeugs abgibt. Auf der Antriebswelle 32 sitzt die elektrische Maschine 15, die bei hoher Leistungsanforderung den Verbrennungsmotor 31 unterstützt, indem sie Antriebsdrehmoment auf die Antriebswelle 32 aufbringt (diese Funktion wird auch als "Boost"-Funktion bezeichnet). Die elektrische Maschine 15 dient außerdem als Starter für den Verbrennungsmotor. Da sie vom Motor- in den Generatorbetrieb umsteuerbar ist, kann sie darüber hinaus bei laufendem Verbrennungsmotor 31 - soweit keine Booster-Funktion erforderlich ist - als Generator zum Laden des Energiespeicherteils 1 und der Bordnetzbatterie 20 sowie zur Versorgung von Bordnetzverbrauchern 21 fungieren. Ferner dient die elektrische Maschine 15 bei Fahrzeugbremsung als Rekuperationsbremse. Hierzu wird die bei einer Rekuperationsbremsung im Generatorbetrieb gewonnene elektrische Energie im Kurzzeitspeicher 2 gespeichert. Die elektrische Maschine 15 ist eine Asynchron-Drehstrommaschine oder - bei anderen Ausführungsformen - eine mit Permanentmagneten ausgerüstete Synchron-Drehmaschine. Sie weist einen direkt auf der Antriebswelle 32 sitzenden und drehfest mit ihr verbundenen Läufer 35 sowie einen z.B. am Gehäuse des Verbrennungsmotors 31 abgestützten Ständer 36 auf, der mit einer Mehrphasenwicklung (z.B. Drei-Phasen-Wicklung) ausgerüstet ist und durch den Wechselrichter 18 mit elektrischen Strömungen und Spannungen frei einstellbarer Amplitude, Frequenz und Phase gespeist wird. Der Wechselrichter 18 ist gemäß Fig. 5 bzw. 6 über den Zwischenkreis 17 mit dem Energiespeicherteil 1 sowie dem Bordnetz 16 mit dem Bordnetzwandler 19 verbunden.

Der Verbrennungsmotor 31 ist mit einem Lastsensor 36 ausgerüstet, welcher ein die momentane Last bzw. Leistungsanforderung an den Verbrennungsmotor 31 repräsentierendes Signal liefert. Dieses kann beispielsweise aus der Stellung der Drosselklappe des Verbrennungsmotors 31 und/oder dem Druck im Ansaugsystem hinter der Drosselklappe abgeleitet werden. Je weiter beispielsweise die Drosselklappe geöffnet ist, oder je niedriger der Druck hinter der Drosselklappe ist, um so größer ist die Last. Ein Steuergerät 37 für die elektrische Maschine 15 entscheidet anhand der vom Lastsensor 36 gelieferten Information, ggf. unter Hinzunahme weiterer, den Betriebszustand des Verbrennungsmotors 31 betreffender Daten (wie z.B. der Drehzahl) sowie ggf. unter Berücksichtigung des Ladungszustands des Energiespeicherteils 1, ob und in welchem Ausmaß die elektrische Maschine 15 eine Boost-Wirkung für den Verbrennungsmotor 31 entfalten soll. Will beispielsweise der Fahrer des Fahrzeugs stark beschleunigen oder ein relativ starkes Gefälle hinauffahren, so wird er das Fahrpedal des Fahrzeugs relativ stark drücken, bezogen auf die momentane Drehzahl des Verbrennungsmotors. Der Lastsensor 36 detektiert dann das Vorliegen einer relativ hohen Last, z.B. aufgrund der relativ weit geöffneten Drosselklappe und/oder des sich dann einstellenden relativ kleinen Saugsystemdrucks hinter der Drosselklappe und signalisiert dies dem Steuergerät 37. Unter Hinzunahme der Information, daß momentan eine relativ geringe Verbrennungsmotordrehzahl vorliegt, entscheidet das Maschinensteuergerät 37, daß eine Boostunterstützung durch die elektrische Maschine 15 erforderlich ist, und steuert den Wechselrichter 18 entsprechend an. Dieser wiederum erzeugt die für eine entsprechende Motorfunktion geeigneten Wechselspannungen- und ströme, wofür wiederum Gleichstrom aus dem Energiespeicherteil 1 bezogen wird. Bei denjenigen Ausführungsformen, bei denen das elektrische Ventil 9 ein durch die Spannungsdifferenz selbstgesteuertes Ventil (z.B. eine Diode) ist, kann die Energieentnahme aus dem Energiespeicherteil 1, einschließlich der ggf. im Laufe der Energieentnahme stattfindenden Parallelschaltung von Kurzzeitspeicher 2 und Langzeitspeicher 3 ohne steuernden Eingriff von außen vor sich gehen. Bei Ausführungsformen gemäß Fig. 6 wird hingegen das elektrische Ventil 9 durch das Energiemanagement-Steuergerät 25 aktiv so gesteuert, daß es ggf. die besagte Parallelschaltung herbeiführt.

Wenn keine Boostfunktion erforderlich ist und das Maschinensteuergerät 37 gleichzeitig Bedarf an elektrischer Energie feststellt, was beispielsweise durch Absinken der Spannung im Zwischenkreis 17 unter einen Schwellenwert, z.B. 40 Volt angezeigt wird, so veranlaßt das Maschinensteuergerät 37 den Wechselrichter 18 zur Erzeugung von für einen Generatorbetrieb geeigneten Spannungen . Die im Generatorbetrieb in der Maschine 15 hervorgerufenen Ströme werden durch den Wechselrichter 18 gleichgerichtet und in den Zwischenkreis 17 eingespeist. Das (für diesen Zweck auch bei der Ausführungsform gemäß Fig. 5 vorgesehene) Energiemanagement-Steuergerät 25 steuert dann den Abwärts-Spannungswandler 11 und/oder den Bordnetzwandler 19 so, daß diese die relativ hohe Zwischenkreisspannung auf z.B. 28V bzw 14V herabsetzen, wodurch der Langzeitspeicher 3 bzw. die Bordnetzbatterie 20 aufgeladen und Verbraucher 21 gespeist werden. Wenn eine Fahrzeugbremsung durchgeführt werden soll, was beispielsweise mit Hilfe eines Bremspedalsensors detektiert werden kann und der Kurzzeitspeicher 2 nicht vollständig aufgeladen ist, also noch Rekuperationsenergie aufnehmen kann, was z.B. durch Messung der Spannung U_{C} festgestellt wird, veranlaßt das Maschinensteuergerät 37 den Wechselrichter 18 zur Erzeugung von für die generatorische Rekuperationsbremsung entsprechend der gewünschten Bremswirkung geeigneten Spannungen und Strömen. Die bei der Rekuperationsbremsung erhaltenen Ströme werden durch den Wechselrichter 18 gleichgerichtet und in den Zwischenkreis 17 eingespeist, so daß die Rekuperationsenergie im Kurzzeitspeicher 2 gespeichert wird. In Fig. 7 sind die Richtungen der Energieflüsse im Boost- und Rekuperationsbetrieb durch Pfeile veranschaulicht.

Eine weitere Funktion der elektrischen Maschine 15 ist das Starten des Verbrennungsmotors 31. Auch hierzu wird - wie bei der Boostfunktion - die erforderliche elektrische Energie aus dem Energiespeicherteil 1 bezogen. Zu diesem Zweck prüft zunächst das Energiemanagement-Steuergerät 25, ob der Kurzzeitspeicher 2 ausreichend aufgeladen ist, z.B. durch Messung der Spannung U_{C}. Falls dies nicht der Fall ist, veranlaßt es vor dem eigentlichen Startvorgang ein Nachladen des Kurzzeitspeichers 2 über den (auch in Aufwärtsrichtung betreibbaren) Spannungswandler 11 oder den Bordnetzwandler 19. Nach erfolgter Aufladung veranlaßt das Maschinensteuergerät 37 den Wechselrichter 18, der elektrischen Maschine 15 für den Startvorgang geeignete Ströme und Spannungen zu liefern. In der Regel wird die im Kurzzeitspeicher 2 gespeicherte Energie zum Starten ausreichen, die Spannung U_{C} wird also nicht so weit abfallen, daß eine Parallelschaltung von Kurzzeitspeicher 2 und Langzeitspeicher 3 erforderlich wird. Bei Langstarts (z.B. bei extremer Kälte oder Startschwierigkeiten) kann aber doch die Parallelschaltbedingung eintreten, so daß in solchen Fällen der Langzeitspeicher 3 im Laufe des Startvorgangs hinzutritt und Startenergie beisteuert, was die Startsicherheit erhöht.

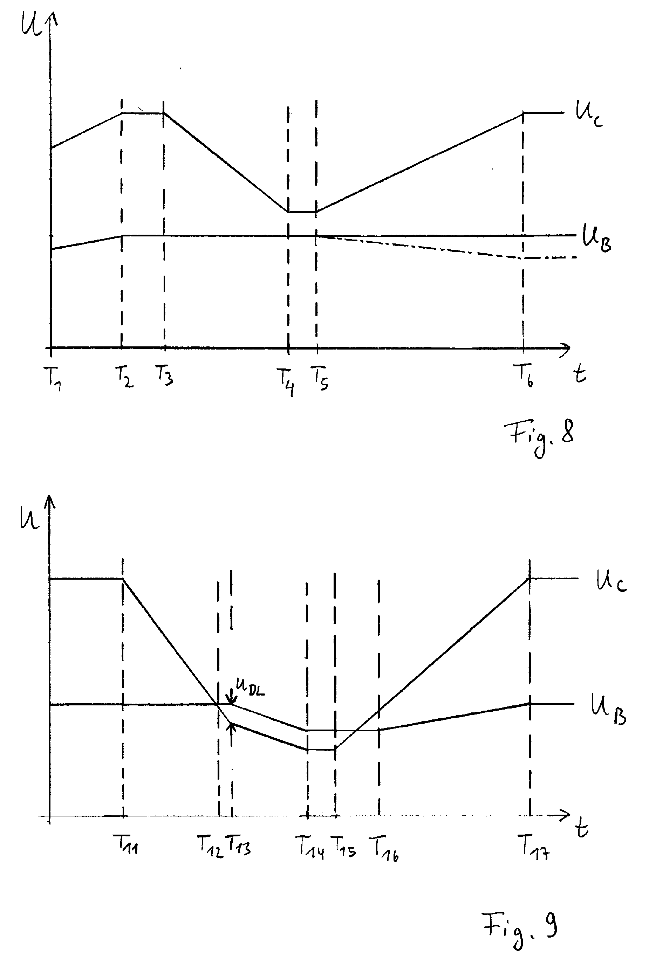

Fig. 8 zeigt einen beispielhaften Verlauf der Spannungen U_{C} und U_{B} für den Fall, daß zunächst beide Speicher 2 und 3 geladen werden und dann eine geringfügige Energieentnahme erfolgt, bei welcher der Langzeitspeicher 3 nicht zur Lieferung von Energie herangezogen wird. Im Zeitraum zwischen T₁ und T₂ werden zunächst der Kurzzeitspeicher 2 und der Langzeitspeicher 3 auf die jeweilige Nennspannung aufgeladen, wofür die als Generator betriebene elektrische Maschine 15 die nötige Energie liefert. Die Ladespannungen liegen wegen der endlichen Innenwiderstände der Speicher 2 und 3 etwas über dem sich nach dem Ladevorgang (d.h. nach T₂) einstellenden Spannungen U_{C} bzw. U_{B}, wobei dieser Effekt wegen des sehr kleinen Innenwiderstands des Kurzzeitspeichers 2 bei diesem vernachlässigbar ist. Beim Langzeitspeicher 3 liegt hingegen die Ladespannung wegen dessen relativ höheren Innenwiderstands um typischerweise 10 bis 20 % über der sich nach dem Ladevorgang einstellenden Klemmenspannung. Zum Zeitpunkt T₃ drückt der Fahrer zwecks Fahrzeugbeschleunigung das Fahrpedal. Um den Verbrennungsmotor bei der nun folgenden Fahrzeugbeschleunigung zu unterstützen, wird die elektrische Maschine 15 nun in den Motorbetrieb gebracht. Die hierfür erforderliche elektrische Energie wird dem Energiespeicherteil 1 entnommen. Der Beschleunigungsvorgang endet zum Zeitpunkt T₄. Während des Beschleunigungsvorgangs sinkt aufgrund der Energieentnahme die Spannung U_{C} des Kurzzeitspeichers ab, unterschreitet jedoch im Beispiel der Fig. 8 nicht die Spannung U_{B} des Langzeitspeichers 3. Aus diesem Grund werden die beiden Speicher 2 und 3 nicht parallel geschaltet, dem Langzeitspeicher 3 wird also keine Energie entnommen. Dessen Spannung bleibt somit konstant. Nach dem Beschleunigungsvorgang wird die elektrische Maschine 15 wieder als Generator betrieben. Die von ihr gelieferte Energie lädt im Zeitraum von T₅ bis T₆ den Kurzzeitspeicher 2 wieder auf dessen Nennspannung auf.

In Fig. 8 ist mit strichpunktierter Linie auch der Fall veranschaulicht, daß die Aufladung des Kurzzeitspeichers 2 aus dem Langzeitspeicher 3 erfolgt. Hierzu wird angenommen, daß der Kurzzeitspeicher 2 teilweise entladen ist, nicht jedoch der Langzeitspeicher 3, wie es zum Zeitpunkt T₅ der Fall ist. Ein solcher Fall kann z.B. auftreten, wenn der Verbrennungsmotor direkt nach einer Entladung des Kurzzeitspeichers 2 stillgesetzt wird oder sich der Kurzzeitspeicher 2 im Laufe einer langen Stillstandsperiode selbst entladen hat. Die Rückladung des Kurzzeitspeichers 2 erfolgt in diesem Fall durch Energieentnahme aus dem Langzeitspeicher 3, wodurch sich die Spannung U_{B} des Langzeitspeichers 3 verringert (siehe strichpunktierter Linie zwischen T₅ und T₆ in Fig. 8).

Fig. 9 zeigt Verläufe der Spannungen U_{C} und U_{B}, nun jedoch für den Fall einer größeren Energieentnahme, bei der auch der Langzeitspeicher 3 herangezogen wird, wie beispielsweise bei einer größeren angeforderten Beschleunigung oder einer länger dauernden Bergauf-Fahrt. Beide Energiespeicher 2 und 3 seien zunächst auf Nennspannung aufgeladen. Zum Zeitpunkt T₁₁ beginnt die Energieentnahme, zunächst wiederum allein aus dem Kurzzeitspeicher 2, dessen Spannung entsprechend absinkt. Zum Zeitpunkt T₁₂ sinkt die Spannung U_{C} des Kurzzeitspeichers 2 auf diejenige U_{B} des Langzeitspeichers 2 ab. Es kommt hierbei aber noch nicht zur Parallelschaltung der beiden Speicher 2, 3, sondern erst, wenn im Zeitpunkt T₁₃ die Spannung U_{C} um die Durchlaßspannung U_{DL} des elektrischen Ventils 9 kleiner als die Spannung U_{B} des Langzeitspeichers 3 ist. Von nun an sinken die Spannungen U_{C} und U_{B} gemeinsam ab, wobei die Steigung des Spannungsabfalls wegen der Parallelschaltung und der flachen Spannungsabfallcharakteristik des (hier als elektrochemisch angenommenen) Langzeitspeichers geringer als im Fall der alleinigen Energieentnahme aus dem Kurzzeitspeicher 2 ist. Zum Zeitpunkt T₁₄ endet die Energieentnahme aus dem Energiespeicherteil 1. Zum Zeitpunkt T₁₅ arbeitet die elektrische Maschine 15 wieder im Generatorbetrieb, und es beginnt die Rückladung des Kurzzeitspeichers 2. Wenn die Spannung U_{C} bei T₁₆ die aktuelle Spannung U_{B} des Langzeitspeichers 3 überschritten hat, beginnt auch dessen Rückladung, und zwar mit niedrigerer Ladespannung als derjeniger des Kurzzeitspeichers 2, bis zum Zeitpunkt T₁₇ beide Speicher 2, 3 wieder auf Nominalspannung aufgeladen sind. Der gleichzeitige Abschluß der Aufladung beider Speicher dient nur der zeichnerischen Vereinfachung; im allgemeinen wird die Rückladung des Langzeitspeichers 3 erst zu einem wesentlich späteren Zeitpunkt als diejenige des Kurzzeitspeichers 2 abgeschlossen sein, insbesondere bei Verwendung eines Abwärts-Wandlers 11 mit geringer Leistung. Bei anderen Ausführungsformen, bei denen beispielsweise die Rückladung des Langzeitspeichers 3 nicht direkt aus dem Zwischenkreis, sondern aus dem Bordnetz erfolgt, kann zeitweise die Ladespannung des Langzeitspeichers 3 über derjenigen des Kurzzeitspeichers 2 liegen, z.B. wenn dieser, wie in Fig. 9, auf tiefere Spannung stärker als der Langzeitspeicher 3 entladen war. Auch bei diesen Ausführungsformen liegt jedoch zumindest am Ende des Ladevorgangs die Ladespannung des Kurzzeitspeichers 2 über derjenigen des Langzeitspeichers 3.

Mit den bevorzugten Ausführungsformen wird ein Hybridantriebssystem mit Boostfunktion bereitgestellt, welches eine relativ kostengünstige Auslegung und lange Lebensdauer der Energiespeicher erlaubt.

## Patentansprüche

1. Hybridantriebssystem, umfassend einen Verbrennungsmotor und eine elektrische Maschine, die mechanisch gekoppelt sind und bei hoher Leistungsanforderung gemeinsam Antriebs-Drehmoment auf den Antrieb aufbringen, wobei das Antriebssystem mit einem Kurzzeitspeicher und einem Langzeitspeicher ausgerüstet ist, und wobei das Antriebssystem so ausgebildet ist, daß der Langzeitspeicher und der Kurzzeitspeicher mit unterschiedlichen Ladespannungen geladen werden, wobei die Ladespannung des Langzeitspeichers niedriger als diejenige des Kurzzeitspeichers ist,
**dadurch gekennzeichnet, daß** der Kurzzeitspeicher und der Langzeitspeicher über ein elektrisches Ventil miteinander gekoppelt sind, derart, daß bei Speisung der elektrischen Maschine diese zunächst allein aus dem Kurzzeitspeicher gespeist wird, woraufhin dessen Spannung abnimmt und, wenn die Spannung des Kurzzeitspeichers die Spannung des Langzeitspeicherserreicht oder unterschreitet, das elektrische Ventil eine Parallelschaltung von Kurzzeitspeicher und Langzeitspeicher bewirkt.

2. Hybridantriebssystem nach Anspruch 1, bei welchem das elektrische Ventil eine Diode ist.

3. Hybridantriebssystem nach Anspruch 1, bei welchem das elektrische Ventil ein von einer Steuerung gesteuerter elektrischer Schalter ist.

4. Hybridantriebssystem nach einem der Ansprüche 1 bis 3, bei welchem der Kurzzeitspeicher ein Kondensatorspeicher ist.

5. Hybridantriebssystem nach einem der Ansprüche 1 bis 4, welches so ausgebildet ist, daß die Ladespannung des Langzeitspeichers höchstens 66 % der Ladespannung des Kurzzeitspeichers beträgt.

6. Hybridantriebssystem nach einem der Ansprüche 1 bis 5, bei welchem zwischen Kurzzeitspeicher und Langzeitspeicher ein Abwärts-Wandler geschaltet, der für die niedrigere Ladespannung des Langzeitspeichers sorgt.

7. Hybridantriebssystem nach einem der Ansprüche 1 bis 6, bei welchem die elektrische Maschine eine Drehfeldmaschine ist, welche durch einen Wechselrichter mit Gleichspannungszwischenkreis angesteuert wird, wobei der Kurzzeitspeicher in den Zwischenkreis geschaltet ist.

8. Hybridantriebssystem nach einem der Ansprüche 1 bis 7, welches neben dem Kurzzeitspeicher und dem genannten Langzeitspeicher einen weiteren Bordnetz-Langzeitspeicher aufweist.

9. Hybridantriebssystem nach Ansprüchen 8 und 7, bei welchem der Bordnetz-Langzeitspeicher mit einem Abwärtswandler mit dem Zwischenkreis verbunden ist.

10. Hybridantriebssystem nach einem der Ansprüche 1 bis 9, bei welchem die elektrische Maschine eine auf der Kurbelwelle des Verbrennungsmotors sitzende und permanent mit ihr gekoppelte Maschine ist.

11. Hybridantriebssystem nach einem der Ansprüche 1 bis 10, bei welchem die elektrische Maschine permanent mit der gleichen Drehzahl wie der Verbrennungsmotor dreht.

12. Hybridantriebssystem nach Anspruch 11, wobei die elektrische Maschine außerdem für die Funktion eines Direktstarters ausgebildet ist.

13. Hybridantriebssystem nach einem der Ansprüche 1 bis 12, bei welchem die elektrische Maschine außerdem für eine Funktion als Generator ausgebildet ist.

14. Hybridantriebssystem nach Anspruch 13, welches so ausgebildet ist, daß die elektrische Maschine außerdem als Rekuperationsbremse arbeitet, wobei die bei einer Rekuperationsbremsung gewonnene elektrische Energie wenigstens teilweise im Kurzzeitspeicher gespeichert wird.

15. Verfahren zur gemeinsamen Aufbringung von Antriebs-Drehmoment in einem Hybridantriebssystem mit einem Verbrennungsmotor und einer mechanisch mit diesem gekoppelten elektrischen Maschine, welches mit einem Kurzzeitspeicher und einem Langzeitspeicher ausgerüstet ist, wobei der Langzeitspeicher und der Kurzzeitspeicher vor der Energieentnahme mit unterschiedlichen Ladespannungen geladen werden, und zwar so, daß die Ladespannung des Langzeitspeichers kleiner als diejenige des Kurzzeitspeichers ist,
**dadurch gekennzeichnet, daß** mit Hilfe einer Kopplung zwischen Kurzzeitspeicher und Langzeitspeicher durch ein elektrisches Ventil die Speisung der elektrischen Maschine zunächst allein aus dem Kurzzeitspeicher erfolgt, woraufhin dessen Spannung abnimmt, und, wenn die Spannung des Kurzzeitspeichers die Spannung des Langzeitspeichers erreicht oder unterschreitet, mit dem elektrischen Ventil eine Parallelschaltung von Kurzzeitspeicher und Langzeitspeicher bewirkt wird.
